# EUROPEAN PATENT APPLICATION

(11) **EP 4 611 336 A1**
(43) Date of publication of application: **03.09.2025**
(21) Application number: 23883008.7
(22) Date of filing: 20.10.2023
(51) Int. Cl.: H04L 41/122, H04L 41/0895

(54) **NODE MANAGEMENT METHOD USING VIRTUAL NODE**

(30) Priority: 27.10.2022 KR 20220140716; 16.01.2023 KR 20230006316
(71) Applicant: Samsung Electronics Co., Ltd., Suwon-si, Gyeonggi-do 16677 (KR)
(72) Inventor: HAM, Jonggyu, Suwon-si, Gyeonggi-do 16677 (KR)
(74) Representative: Arnold & Siedsma
(86) International application number: PCT/KR2023/016320
(87) International publication number: WO 2024/090901

(57) **Abstract**

The present disclosure relates to a method and node for performing communication through a virtual node. In the method of performing communication by the virtual node according to an embodiment of the present disclosure, a registration request may be received from at least one node from among a plurality of nodes. In the method of performing communication by the virtual node, at least one registration may be performed based on information related to at least one node. In the method of performing communication by the virtual node, a first node to which a pod is to be transmitted may be identified from among the at least one node and the pod may be transmitted to the first node, based on the information related to the at least one node. The pod may be received from a control plane that controls the plurality of nodes and the virtual node.

## Description

### Technical Field

The present disclosure relate to a method of registering and managing at least one node by using a virtual node.

### Background Art

Recent advancements in of computing technology, a cluster including a plurality of computers or groups of applications operating for a common goal rather than a single computer has emerged. That is, cluster computing may perform tasks together by integrating and coordinating a plurality of machines which may include a master node and a plurality of nodes to perform the tasks.

For example, nodes within an existing cluster may include static nodes that may have little to no mobility and as such, may perform tasks without significant changes in available resources. For a system requiring high level of security, the system may be implemented as an on-premise system without using an external cloud. A cluster may be configured to include mobile nodes to ensure resource mobility. For nodes with a lot of fluctuation in a network state due to resources, batteries, or mobility, such as mobile nodes, the cluster may be poorly configured. Accordingly, there is a need for a method of controlling nodes within a cluster.

### Disclosure of Invention

### Solution to Problem

According to an aspect of the present disclosure, a method of performing communication by the virtual node includes receiving a registration request may be received from at least one node from among a plurality of nodes. In the method of performing communication by the virtual node, at least one registration may be performed based on information related to at least one node. In the method of performing communication by the virtual node, a first node to which a pod is to be transmitted may be identified from among the at least one node and the pod may be transmitted to the first node, based on the information related to the at least one node. The pod may be received from the control plane that controls the plurality of nodes and the virtual node.

According to an aspect of the present disclosure, a method of performing communication by the virtual node includes obtaining, from a control plane, information related to a virtual that controls a plurality of nodes including the node. In the method, a registration request including information related to the node may be transmitted to the virtual node, based on the information related to the virtual node. In the method, at least one pod may be received from the virtual node, based on registration information generated in response to the registration request. The at least one pod may be received from the control plane.

According to an aspect of the present disclosure, a virtual node for performing communication includes a transceiver, memory storing one or more instructions, and at least one processor configured to execute the one or more instructions. The at least one processor may be configured to receive the registration request from at least one node of a plurality of nodes. The at least one processor may be configured to perform registration of the at least one node, based on information related to the at least one node. The at least one processor may be configured to identify a first node to which a pod is to be transmitted from among the at least one node and transmit the pod to the first node, based on the information related to the at least one node. The pod may be received from the control plane that controls the plurality of nodes and the virtual node.

### Brief Description of Drawings

FIG. 1 is a diagram for explaining a node management method according to an embodiment of the present disclosure.
FIG. 2 is a diagram for explaining a node management method through a virtual node according to an embodiment of the present disclosure.
FIG. 3 is a diagram for explaining an operation of a virtual node according to an embodiment of the present disclosure.
FIG. 4 is a schematic block diagram of a virtual node according to an embodiment of the present disclosure.
FIG. 5 is a flowchart for explaining a node management method through a virtual node according to an embodiment of the present disclosure.
FIG. 6 is a flowchart for explaining a procedure for registration to a virtual node according to an embodiment of the present disclosure.
FIG. 7 is a flowchart for explaining a distribution procedure of a pod according to an embodiment of the present disclosure.
FIG. 8 is a diagram for explaining a rearrangement procedure of a pod according to an embodiment of the present disclosure.
FIG. 9 is a flowchart for explaining an example of a node management method through a virtual node according to an embodiment of the present disclosure.
FIG. 10 is a flowchart for explaining an example of a node management method through a virtual node according to an embodiment of the present disclosure.

### Mode for the Invention

Hereinafter, embodiments of the present disclosure are described in detail with reference to the attached drawings.

The present disclosure may have various modifications and embodiments, and thus certain embodiments are illustrated in the drawings and described through the detailed description. However, the described embodiments are not intended to limit the embodiments of the present disclosure, and it is to be understood that the present disclosure includes all modifications, equivalents, and alternatives included in the spirit and technical scope of the various embodiments.

In describing the embodiments, if it is determined that a detailed description of a related known technology may unnecessarily obscure the gist of the present disclosure, the detailed description may be omitted. Numbers used in the description of the present disclosure (e.g., "first", or "second") are merely identifiers to distinguish one component from another.

The terms used in the embodiments of the present disclosure may be selected from commonly used terms as much as possible while considering the functions of the present disclosure, but these may vary depending on the intention of a technician working in the field, precedents, the emergence of new technologies, or the like. In certain cases, there are terms arbitrarily selected by the applicant, and in this case, the meanings of the terms may be described in the description of the corresponding embodiment. Therefore, the terms used in the present disclosure may be defined based on the meaning of the terms and the overall contents of the present disclosure, rather than simply the names of the terms.

The scope of the present disclosure may be indicated by the claims below rather than by the detailed description above. Various features mentioned in one claim category of the present disclosure (e.g., in a method claim) may also be claimed in another claim category (e.g., in a system claim). An embodiment of the present disclosure may include not only combinations of features specified in the appended claims, but also various combinations of individual features within the claims. The scope of the present disclosure needs to be interpreted to include all changes or modifications derived from the meaning and scope of the claims and their equivalent concepts within the scope of the present disclosure.

Components expressed as '~ unit' or 'module' in the present disclosure may be two or more components combined into one component, or one component may be divided into two or more components according to more detailed functions. These functions may be implemented in hardware, software, or a combination of hardware and software. Each component described below may additionally perform some or all of the functions performed by other components in addition to its own main function, and some of the main functions performed by each component may be performed exclusively by other components.

A singular expression may include a plural expression unless the context clearly indicates otherwise. Terms used herein, including technical or scientific terms, may have the same meaning as commonly understood by those of skill in the art described herein.

Throughout the present disclosure, unless specifically stated otherwise, "or" is inclusive and not exclusive. Thus, unless explicitly indicated otherwise or the context indicates otherwise, "A or B" may mean "A, B, or both." In the present disclosure, the phrases "at least one of ~" or "one or more ~" may mean that different combinations of one or more of the listed items may be used, or that only any one of the listed items is required. For example, "at least one of A, B, and C" may include any of the following combinations: A, B, C, A and B, A and C, B and C, or A, B and C.

It is to be understood that each block of processing flowcharts and combinations of the flowcharts may be performed based on computer program instructions. These computer program instructions may be installed in a processor of a general-purpose computer, a special-purpose computer, or other programmable data processing apparatus, and thus the instructions executed by the processor of the computer or other programmable data processing apparatus generate an element for performing the functions described in the flowchart blocks. These computer program instructions may also be stored in a computer-available or computer-readable memory that may direct a computer or other programmable data processing device to implement a function in a certain manner, and thus the instructions stored in the computer-available or computer-readable memory may also produce an article of manufacture that includes an instruction element for performing the function described in the flowchart blocks. The computer program instructions may be installed in a computer or other programmable data processing apparatus, and thus a series of operations may be performed on the computer or other programmable data processing apparatus to generate a process executed by a computer, and the instructions executing the computer or other programmable data processing apparatus may also provide operations for executing the functions described in the flowchart blocks.

Each block may represent a module, segment, or portion of code that contains one or more executable instructions for performing a particular logical functions. It is noted that in some alternatives, it may be possible for the functions mentioned in the blocks to occur out of order. For example, two blocks shown in succession may in fact be executed substantially simultaneously, or the blocks may sometimes be executed in reverse order, depending on their respective functions.

A function related to artificial intelligence according to the present disclosure may be operated through a processor and memory. The processor may include one or more processors. The one or more processors may be and/or may include a general-purpose processor (e.g., a central processing unit (CPU), an application processor (AP), or a digital signal processor (DSP)), a graphics-only processor (e.g., a graphics-processing unit (GPU) or a vision processing unit (VPU)), or an artificial intelligence-only processor (e.g., a neural processing unit (NPU)). The one or more processors may be controlled to process input data according to a predefined operation rule and/or artificial intelligence (AI)model stored in memory. Alternatively, if the one or more processors are Al-specific processors, the Al-specific processors may be designed with a hardware structure specialized for processing a particular Al model.

The predefined operation rule or Al model may be made through learning. As used herein, being made through learning may refer to a basic Al model being learned (trained) by using a relatively large amount of learning data, based on a learning algorithm, thereby making a predefined operation rule or Al model configured to perform a desired characteristic (or purpose). Such learning may be performed on a device itself on which AI, according to the present disclosure, may be performed, and/or may be performed through a separate server and/or system. Examples of learning algorithms may include, but may not be limited to, supervised learning, unsupervised learning, semi-supervised learning, reinforcement learning, or the like.

An Al model may include a plurality of neural network layers. The plurality of neural network layers may have a plurality of weight values, respectively, and may perform a neural network operation through an operation between the operation result of a previous layer and the plurality of weight values. The plurality of weight values of the plurality of neural network layers may be optimized according to the learning result of the Al model. For example, the plurality of weight values may be updated such that a loss value and/or cost value obtained from the Al model may be reduced and/or minimized during a learning procedure. An artificial neural network may include a deep neural network (DNN), for example, a convolutional neural network (CNN), a deep neural network (DNN), a recurrent neural network (RNN), a restricted Boltzmann machine (RBM), a deep belief network (DBN), a bidirectional recurrent deep neural network (BRDNN), or deep Q-networks. However, the present disclosure is not limited to the examples described above.

Hereinafter, embodiments of the present disclosure are described with reference to the accompanying drawings such that those of skill in the art to which the present disclosure pertains may easily implement the present disclosure. However, the present disclosure may be implemented in many different forms and is not limited to the embodiments described herein. To explain the present disclosure in the drawings, portions that are not related to the explanation may be omitted, and similar portions are given similar drawing reference numerals throughout the present disclosure.

The terms used in the present disclosure are briefly described, and an embodiment of the present disclosure is described in detail.

The terms described below are terms defined in consideration of functions in the present disclosure and may vary depending on the intention or custom of a user or operator. Therefore, the definition may be based on the contents throughout the present disclosure.

As used herein, a 'cluster' may refer to a group of nodes operating for a common goal.

As used herein, a 'node' may be and/or may include a single server included in a cluster and may refer to a computing engine unit.

As used herein, a 'pod' may refer to a the smallest distributable computing unit that is to be generated and managed in a cluster.

As used herein, a 'container' may refer to part or all of an application.

As used herein, a 'control plane' may refer to a node that manages operations within a cluster and may also be referred to as a master node or as a master server.

In As used herein, a ' universally unique identifier (UUID)' may refer to a universally unique identifier and a unique identifier assigned to a node.

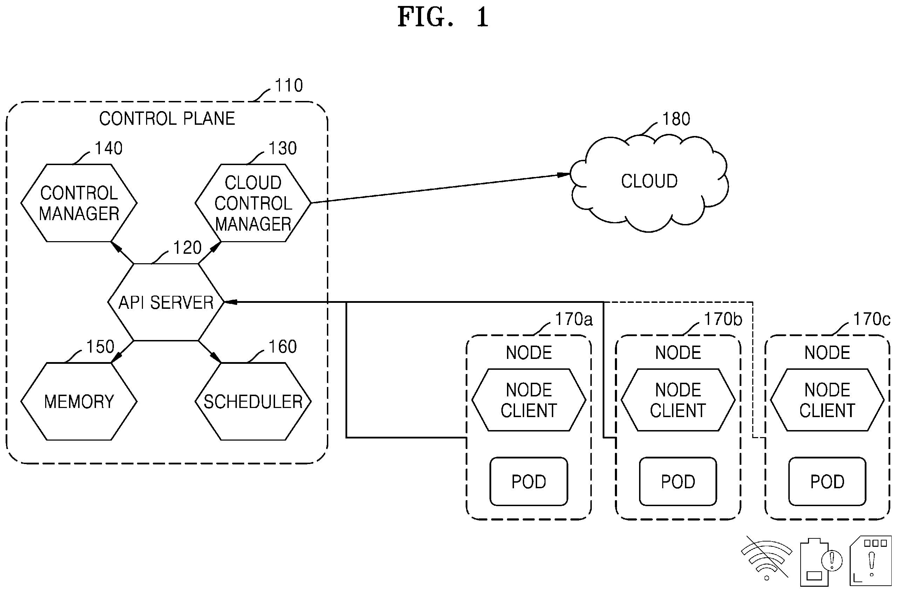

FIG. 1 is a diagram for explaining a node management method according to an embodiment of the present disclosure.

Referring to FIG. 1, a control plane 110 may include, but is not limited to, an application programming interface (API) server 120, a cloud control manager 130, a control manager 140, memory 150, and a scheduler 160. Nodes 170a, 170b, and 170c may include a node client and may receive a pod from the control plane. As used herein, the control plane 110 may be referred to as a master server or a master node. The control plane 110 may transmit and receive data to and from an external cloud 180.

The control plane 110 may obtain information about the plurality of nodes 170a, 170b, and 170c through virtualization-based clustering and manage the plurality of nodes 170a, 170b, and 170c, based on the obtained information. As used herein, clustering may refer to an operation of connecting a plurality of systems connected to a network to operate as a single system to process a high-performance task or a large-scale task. As an example of virtualization clustering, the control plane 110 may manage the plurality of nodes 170a, 170b, and 170c through the Kubernetes management system. Kubernetes is an open source platform for managing a containerized workload and a service.

The control plane 110 may determine the overall operation of a cluster and may detect and react to an event occurring within the cluster. The API server 120 of the control plane 110 may play a central role in a virtualization cluster. The API server 120 may provide an interface at a server side such that a client may request a resource. The API server 120 may serve as a central access point to monitor each element (e.g., a node or a pod) of the cluster and perform a task. For example, the control plane 110 may interact with and exchange data with the plurality of nodes 170a, 170b, and 170c through the API server 120.

In an embodiment, the API server 120 may perform various functions within the cluster, such as, but not limited to, user authentication, request validation, data reception, memory update, and scheduling.

In an embodiment, the plurality of nodes 170a, 170b, and 170c may obtain information about a virtual node (not shown) from the API server 120. The plurality of nodes 170a, 170b, and 170c may determine whether connection to the virtual node is possible based on the obtained information about the virtual node. In an embodiment of the present disclosure, the information about the virtual node may include, but is not limited to, a connection method to the virtual node, a connection address (e.g., an Internet Protocol (IP) address), or the like.

The cloud control manager 130 of the control plane 110 may be a component that may include control logic for each cloud 180. The cloud control manager 130 may connect the cluster to the cloud 180 and perform addition/deletion of a node.

The control manager 140 of the control plane 110 may manage a state of an object within the virtualization cluster. The control manager 140 may include, but is not limited to, a node controller for managing a node, a job controller for generating a pod for a one-time task until the corresponding task is completed, an endpoint controller for connecting a service to the pod, and a token controller for generating an API access token. The control manager 140 may refer to a processor that may monitor various resources driven within the cluster and may manage the resources to perform an operation.

The memory 150 of the control plane 110 may store all data of the cluster. In the present disclosure, the memory 150 may refer to a distributed data storage, for example, etcd. The memory 150 may store and manage information about the state of an object. The distributed data storage may store information about each component within the cluster in the form of key-value to be distributed and stored and may replicate and store the corresponding value in a distributed manner. For example, data stored in the memory 150 may include information about the number of nodes in the cluster, available memory for each node, a pod managed by each node, and containers provided in respective pods.

The scheduler 160 of the control plane 110 may select a node on which the generated pod is to be executed. The scheduler 160 may determine a node on which a pod is to be placed in consideration of an available resource of a node, a current resource state, and the like. For example, the scheduler 160 may arrange pods on nodes, based on a computing resource (e.g., CPU, or memory) required by a plurality of pods, or arrange the pods, based on a state of a resource remaining on the nodes after the pods are arranged.

The plurality of nodes 170a, 170b, and 170c may include at least one pod. The pod may include at least one container. The plurality of nodes 170a, 170b, and 170c may transmit information about the node to the control plane 110. The information about the node may include, but is not limited to, a UUID of the node, an available resource of the node, a current resource state, and information about the managed pod. The plurality of nodes 170a, 170b, and 170c may receive information about another node from the control plane 110.

Depending on types of the plurality of nodes 170a, 170b, and 170c, a network connection state, a resource state, a battery state, and the like may be different. For example, from among the plurality of nodes 170a, 170b, and 170c, there may be a node with stable battery, resource, and network connection. There may be nodes 170c with an unstable network connection or an insufficient battery capacity or resources. When a node is mobile, connection to a network may be unstable. For example, in the case of a mobile node, depending on movement of a user, a type of network to which the node is connected may change or the connection may be lost, and as a result, connection with other nodes within the cluster may be unstable. Thus, there is a need for a management method for a node that may not be capable of performing an operation stably within a cluster (e.g., when a resource of the node is limited or there is a battery problem). When data is managed through an owned management server (i.e., on-premise) rather than using a public cloud, more efficient and variable resources may need to be utilized. Hereinafter, a method of managing at least one node by using a virtual node is described.

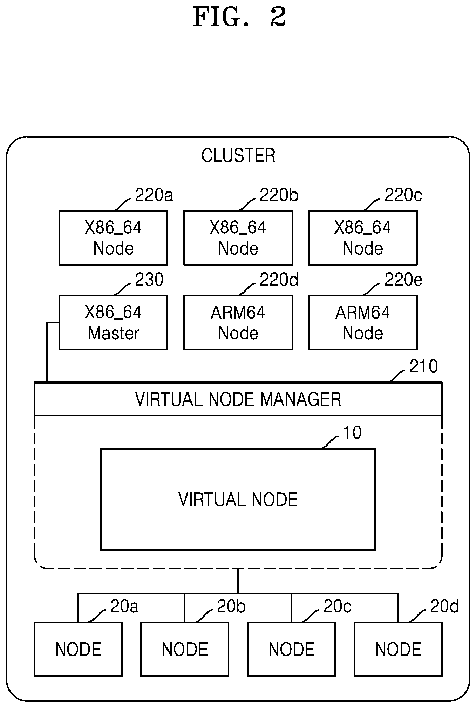

FIG. 2 is a diagram for explaining a node management method through a virtual node according to an embodiment of the present disclosure.

Referring to FIG. 2, within a cluster, there may be existing multiple nodes 220a, 220b, 220c, 220d, and 220e and at least one master node 230 for managing the nodes. The cluster may include a virtual node 10 for managing at least one node 20a, 20b, 20c, and 20d, and a virtual node manager 210 for managing a virtual node 10.

In an embodiment, the existing multiple nodes 220a, 220b, 220c, 220d, and 220e may include, but are not limited to, X86, X64, and ARM64. The master node 230 for managing nodes may include a plurality of nodes. The master node 230 may transmit and receive a pod and data to and from the existing multiple nodes 220a, 220b, 220c, 220d, and 220e and the virtual node 10.

In an embodiment, the at least one node 20a, 20b, 20c, and 20d may refer to a node that may not ve capable of performing an operation stably within the cluster due to unstable network connection or lack of battery or resources. In an embodiment, the at least one node 20a, 20b, 20c, and 20d may refer to a mobile node.

In an embodiment, the master node 230 may manage the virtual node 10 at the same level as the existing multiple nodes 220a, 220b, 220c, 220d, and 220e. In an embodiment, the virtual node 10 may include, but is not limited to, a virtual node client and a node manager. The virtual node client of the virtual node 10 may exchange data with the control plane or the master node 230. The virtual node client may be managed by the master node 230. The virtual node client may perform the same function as a node client of the existing node. For example, the virtual node client may transmit, to the master node 230, information about the at least one node 20a, 20b, 20c, and 20d registered in the virtual node and receive, from the master node 230, a pod to be placed in the at least one node 20a, 20b, 20c, and 20d. The node manager of the virtual node 10 may perform an operation related to the at least one node 20a, 20b, 20c, and 20d and exchange data therewith. The node manager may manage a resource of the at least one node 20a, 20b, 20c, and 20d. The node manager may transmit a pod to each node, based on information about the at least one node 20a, 20b, 20c, and 20d.

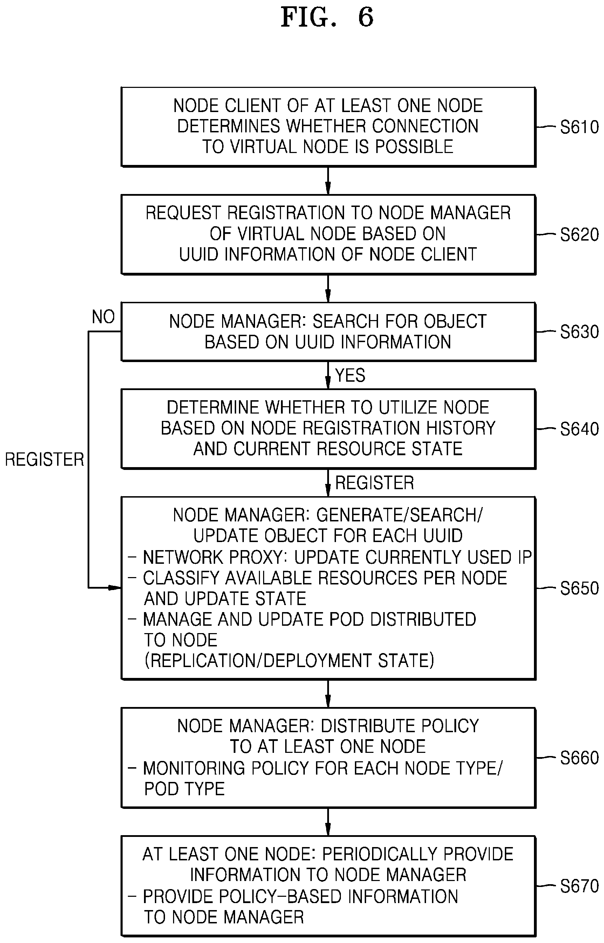

In an embodiment, the at least one node 20a, 20b, 20c, and 20d may obtain information about the virtual node 10 from the master node 230. The at least one node 20a, 20b, 20c, and 20d may perform a registration request, based on the obtained information about the virtual node 10. The virtual node 10 may perform a registration operation, based on information about the at least one node 20a, 20b, 20c, and 20d, which is provided in the registration request, or information about the at least one node 20a, 20b, 20c, and 20d, which is received separately. The virtual node 10 may perform the registration operation, based on whether there is a registration history of the at least one node 20a, 20b, 20c, and 20d. Hereinafter, a method of performing registration in the virtual node 10 is described with reference to FIG. 6.

In an embodiment, the virtual node 10 may transmit, to the at least one node 20a, 20b, 20c, and 20d in which registration is completed, information for managing a node or a pod to be distributed to the node. Based on the information for managing the node or the pod, the at least one node 20a, 20b, 20c, and 20d may periodically transmit, to the virtual node 10, resource information of the at least one node 20a, 20b, 20c, and 20d or information about an occurring event.

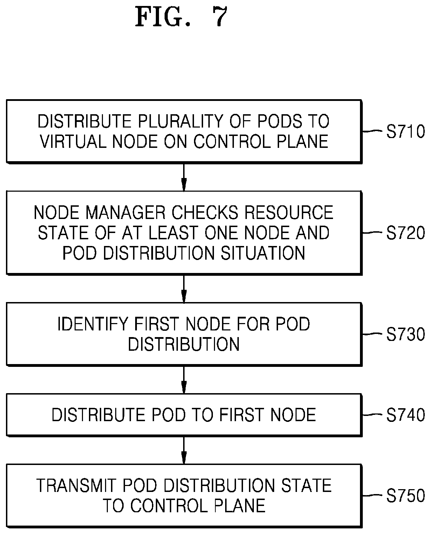

In an embodiment, a node client of the virtual node 10 may receive, from the master node 230, a plurality of pods. The master node 230 may transmit, to the virtual node 10, a plurality of pods, based on resource information of all of the at least one node 20a, 20b, 20c, and 20d registered in the virtual node 10. The node manager of the virtual node 10 may distribute pods, based on the resource information about each of the at least one node 20a, 20b, and 20c. Hereinafter, a method of distributing pods is described with reference to FIG. 7.

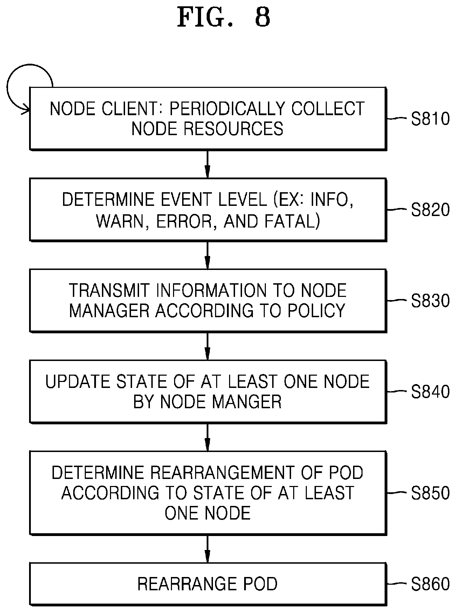

In an embodiment, the virtual node 10 may determine to rearrange pods when an event occurs in the at least one node 20a, 20b, 20c, and 20d. Hereinafter, a method of rearranging pods is described in detail with reference to FIG. 8.

In an embodiment, when performing transmission or rearrangement to the at least one node 20a, 20b, 20c, and 20d, the virtual node 10 may transmit or report, to the master node 230, information related to arrangement of the pods.

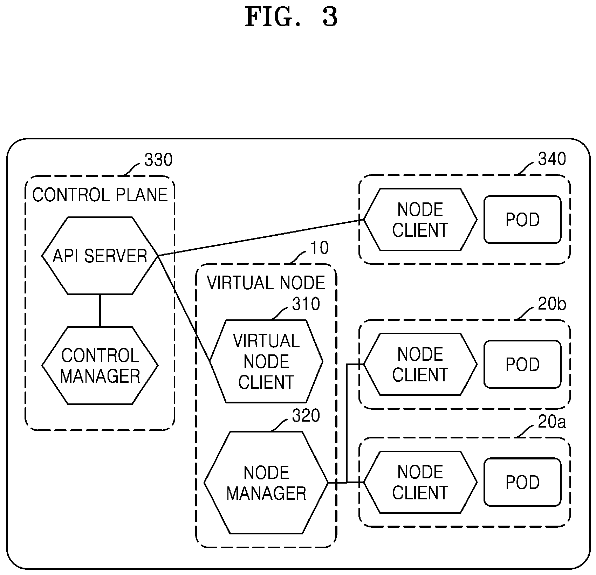

FIG. 3 is a diagram for explaining an operation of a virtual node according to an embodiment of the present disclosure.

Referring to FIG. 3, the virtual node 10 may manage at least one node 20a and 20b between a control plane 330 and the at least one node 20a and 20b. In an embodiment of the present disclosure, the virtual node 10 may be located inside or outside the master node. For example, the master node may include the control plane 330 and the virtual node 10. Alternatively, the master node may include the control plane 330. The virtual node 10 may include, but is not limited to, a virtual node client 310 and a node manager 320.

In an embodiment, the virtual node client 310 may transmit and receive data to and from an API server of the control plane 330 or receive a pod from the API server. The API server of the control plane 330 may serve as a central access point that may monitor each component within the cluster and may allow each component to perform a task. For example, the API server may be connected to an existing node 340 and the virtual node 10 and control an operation to be performed by each node. The API server may distribute pods, based on a resource state of the existing node 340 and the virtual node 10. The resource of the virtual node 10 may refer to a resource state or the sum of available resources of the at least one node 20a and 20b registered in the virtual node 10. The control plane 330 or the API server may treat the existing node 340 and the virtual node 10 as nodes of the same level. In an embodiment of the present disclosure, the control plane 330 may perform an operation, based on the entire information managed by the virtual node 10, rather than information about each of the at least one node 20a and 20b connected to the virtual node 10. For example, the control plane 330 may perform an operation within the cluster, based on resources or information of all of the at least one node 20a and 20b connected to the virtual node 10.

In an embodiment, the at least one node 20a and 20b may receive, from the control plane 330, information about the virtual node 10 for a registration request to the virtual node 10. Based on information about the virtual node 10 (e.g., connection method, or connection address), the at least one node 20a and 20b may identify whether connection to the virtual node 10 may be possible and perform a registration request to the virtual node 10. The virtual node 10 may perform a registration operation, based on information about the at least one node 20a and 20b. The information about the at least one node 20a and 20b may include, but is not limited to, information about a UUID of the at least one node 20a and 20b, model information, available memory, information about a pod managed by the node, or a registration history in the virtual node 10. Hereinafter, the registration operation in the virtual node 10 is described with reference to FIG. 6.

In an embodiment, the virtual node 10 may transmit information for managing a node or a pod to the at least one node 20a and 20b. The virtual node 10 may distribute pods to the at least one node 20a and 20b according to information and may periodically receive, from the at least one node 20a and 20b, information about a resource or an event. The virtual node 10 may determine rearrangement of pods within the at least one node 20a and 20b, based on the periodically obtained information and information for managing a node or a pod. Hereinafter, a method of distributing and rearranging pods is described with reference to FIGS. 7 and 8.

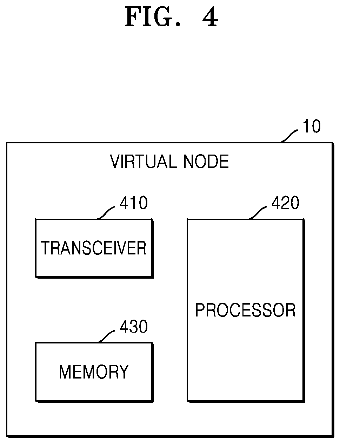

FIG. 4 is a schematic block diagram of a virtual node according to an embodiment of the present disclosure.

Referring to FIG. 4, the virtual node 10 according to an embodiment of the present disclosure may include a transceiver 410 configured to perform communication with an external node (not shown), at least one processor 420 configured to perform at least one instruction, and memory 430 storing the at least one instruction. However, not all of the components shown are required. The virtual node 10 may be implemented by more components than the illustrated components, or the virtual node 10 may be implemented by fewer components.

The transceiver 410 may communicate with external nodes (not shown) through a wired or wireless network. Here, the external node (not shown) may include at least one node connected to the master node or the virtual node 10 that manages the nodes.

The transceiver410 according to an embodiment may include at least one communication module, such as a short-range communication module, a wired communication module, a mobile communication module, and a broadcast receiving module. Here, at least one communication module may include a tuner that may perform broadcast reception, or a communication module that may be capable of performing data transmission and reception through a network that complies with a communication standard such as Bluetooth, wireless Local Area Network (LAN) (WLAN), Wireless-Fidelity (Wi-Fi), wireless broadband (Wibro), world interoperability for microwave access (Wimax), Code-Division Multiple Access (CDMA), or wideband CDMA (WCDMA). The transceiver 410 according to an embodiment of the present disclosure may receive, from at least one node, information about a UUID, available memory, pod, or registration history. The transceiver 410 may transmit, to the master node, data including resource information and receive a plurality of pods. The transceiver 410 may transmit, to at least one node, a pod or information for managing a node and a pod.

The processor 420 may control the overall operation of the virtual node 10. In an embodiment of the present disclosure, the processor 420 may be implemented with a plurality of processors. For example, the processor 420 may execute the instruction stored in the memory 430 to perform a registration operation in response to a registration request from at least one node by using data received from the transceiver 410. Based on information about at least one node, a plurality of pods received from the master node may be distributed to at least one node. In an embodiment of the present disclosure, the processor 420 may generate or update information about at least one node based on information about a registration history of at least one node. The processor 420 may determine whether to rearrange pods, based on information about an event, received from the at least one node.

The memory 430 may store a program command or code executed in the processor 420 and may store input/output data (e.g., information about at least one node, a pod received from a master node, or information about an event). In an embodiment of the present disclosure, the memory 430 may be implemented with a plurality of memories.

The memory 430 may include at least one type of storage medium from among a flash memory type, a hard disk type, a multimedia card micro type, card type memory (e.g., an Secure Digital (SD) or eXtreme Digital (XD) memory), random access memory (RAM), static random access memory (SRAM), read-only memory (ROM), electrically erasable programmable read-only memory (EEPROM), programmable read-only memory (PROM), magnetic memory, a magnetic disk, and an optical disk.

In an embodiment, the memory 430 may store data obtained through the transceiver 410. The data may include, but may not be limited to, a UUID of at least one node, available memory of at least one node, information about a pod, and information about an event.

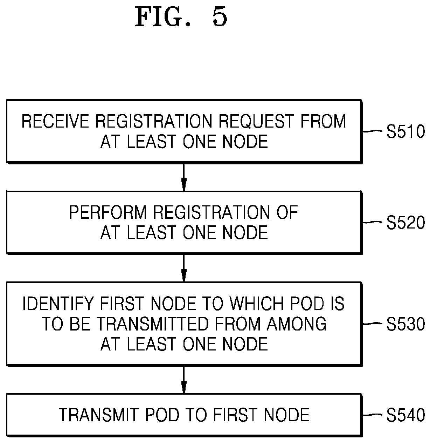

FIG. 5 is a flowchart for explaining a node management method through a virtual node according to an embodiment of the present disclosure.

In operation S510, the virtual node 10 may receive a registration request from at least one node 20. In an embodiment of the present disclosure, the virtual node 10 may be located inside the master node or may be located externally, separately from the master node. The master node may include a control plane. The at least one node 20 may refer to a node in an unstable state, such as having unstable network connection or an insufficient battery or storage capacity. In an embodiment of the present disclosure, the at least one node 20 may refer to a mobile node.

In an embodiment, the virtual node 10 may include a virtual node client and a node manager. The node client of the virtual node 10 may transmit and receive data or a pod to and from the control plane. The node manager of the virtual node 10 may receive a registration request from the at least one node 20.

In an embodiment, the at least one node 20 may identify whether connection to the virtual node 10 is possible based on information about the virtual node 10. The information of the virtual node 10 may include, but is not limited to, an access method or access address (e.g., IP address) to the virtual node 10. The at least one node 20 may obtain the information about the virtual node 10 from the API server of the control plane to recognize whether there is the virtual node 10 or a connection method to the virtual node 10. In the present disclosure, an API server may be a server that may perform a mechanism that allows nodes to communicate with each other by using a set of definitions and protocols and may refer to an interface provided at a server side to allow a client to request a resource. The API server may manage a cluster network interface (CNI) that represents connection between nodes. Depending on a location or situation in which the at least one node 20 is located, whether there is the virtual node 10 to which a registration request is possible may vary. Accordingly, the at least one node 20 may obtain information about the virtual node 10 from the API server and, based on the obtained information, identify whether registration in the virtual node 10 is possible. When determining that registration in the virtual node 10 is possible, the at least one node 20 may transmit a registration request to the virtual node 10.

In an embodiment, the registration request of the at least one node 20 may include information about the at least one node 20. The information about the at least one node 20 may include, but is not limited to, information about a UUID of the at least one node 20, model information, available memory, information about a pod managed by the at least one node 20, and a registration history in the virtual node 10. In the present disclosure, a UUID may be a universally unique identifier and may refer to an identifier that may be ensured to be unique for each node on a network of a cluster.

In operation S520, the virtual node 10 may perform registration of the at least one node 20. In an embodiment of the present disclosure, the virtual node 10 may perform registration of the at least one node 20, based on information about the at least one node 20. The information about the at least one node 20 may be provided in the registration request received in operation S510. Alternatively, the virtual node 10 may receive the information about the at least one node 20 separately from the registration request.

In an embodiment, the virtual node 10 may identify the information about the at least one node 20, based on a UUID of the at least one node 20. The virtual node 10 may obtain information about the registration history of the at least one node 20 to the virtual node 10, based on the UUID of the at least one node 20.

In an embodiment, the virtual node 10 may perform a registration operation, based on the information about the registration history of the at least one node 20. That is, when the at least one node 20 has a registration history in the virtual node 10, the virtual node 10 may determine whether to use the at least one node 20, based on the registration history and the information about the at least one node 20. For example, the virtual node 10 may obtain information about a purpose for which the at least one node 20 is previously used, information about a managed pod, and information about a function performed within a cluster and a resource state, based on the information about the registration history of the at least one node 20. The virtual node 10 may perform a registration operation when determining that the at least one node 20 is available based on the obtained information. In an embodiment of the present disclosure, the node manager of the virtual node 10 may determine whether the at least one node 20 is utilized and perform a re-registration operation.

In an embodiment, the virtual node 10 may update information about the at least one node 20 when performing a re-registration procedure for the at least one node 20 that has a registration history. The node manager of the virtual node 10 may update information about the at least one node 20. For example, information about an IP of the virtual node 10 that receives a registration request, information about an available resources and current resource state of the at least one node 20, and information about a pod managed/to be managed by the at least one node 20 may be updated.

According to an embodiment, when the at least one node 20 does not have a registration history in the virtual node 10, the virtual node 10 may determine whether to perform a registration procedure for the at least one node 20, based on the obtained information about the at least one node 20. When performing a registration procedure for the at least one node 20, the virtual node 10 may generate information about the at least one node 20. The node manager of the virtual node 10 may generate the information about the at least one node 20. For example, information about an IP of the virtual node 10 that receives a registration request, information about an available resources and current resource state of the at least one node 20, and information about a pod managed/to be managed by the at least one node 20 may be generated.

In an embodiment, the virtual node 10 may manage a pod, based on the generated or updated information about the at least one node 20 or may perform a re-registration operation when receiving a registration request from the at least one node 20 thereafter.

In an embodiment, the virtual node 10 may transmit information for managing a node or a pod to the at least one node 20 that completes registration. The information for managing a node may include a policy for node management. That is, the policy for node management may include information on a method of transmitting and receiving information about an event or a cycle for transmitting and receiving information when an event occurs in the at least one node 20. The policy for node management may include a method by which the at least one node 20 may manage a pod. The at least one node 20 may periodically transmit, to the virtual node 10, information about a resource state and information about the at least one node 20 according to the policy. The virtual node 20 may determine whether to transmit or rearrange a pod, based on the received information related to the at least one node 20.

In operation S530, the virtual node 10 may identify a first node, to which a pod is to be transmitted, from among the at least one node 20. The virtual node 10 may identify the first node, to which the pod is to be transmitted, based on the information about the at least one node 20 from among the at least one node 20 registered in operation S520.

In an embodiment, the virtual node 10 may receive a plurality of pods from a control plane. The virtual node 10 may determine a node to which the plurality of pods are to be transmitted, based on the obtained information about the at least one node 20. Depending on a resource state, registration history, usage history, or connection state of a node, or the like, the virtual node may determine a node to which the plurality of pods are to be transmitted. For example, when a node A has a history of managing a pod x, the virtual node may retransmit the pod x to the node A. The virtual node may transmit a plurality of pods to a node B if the node B has sufficient resources.

In an embodiment, a virtual node client of the virtual node 10 may receive a plurality of pods from an API server of the control plane. The API server may transmit a pod to the virtual node 10, based on resource information of all of the at least one node 20 registered in the virtual node 10. For example, the API server may transmit a pod, based on the information about all of the at least one node 20 registered in the virtual node 10, rather than information about each of the at least one node 20.

The node manager of the virtual node 10 may determine a node to which the plurality of pods are to be transmitted, based on information about the registered at least one node 20. For example, when connection to the at least one node 20 is unstable, a pod may not be transmitted to the corresponding node. When there is a pod managed by the at least one node 20 and resources for managing additional pods are not sufficient, the virtual node 10 may not transmit the pod to the corresponding node.

In operation S540, the virtual node 10 may transmit a pod to the first node. The virtual node 10 may transmit the pod to the first node identified in operation S530.

In an embodiment, the virtual node 10 may transmit the pod to the first node from among at least one node, based on information or a policy for managing the at least one node 20.

In an embodiment, the virtual node 10 may receive information about an event from the at least one node 20 when an event occurs in the at least one node 20, based on information or a policy for managing the node. The event may include a log level. For example, the event may include an informational message (info) such as state changes, a warning message (warn) indicating that there is no problem with execution itself but that an error may be caused in the future, a state message (error) indicating that a problem occurs during processing of a request, and a state message (fatal) indicating that a serious error occurs.

The policy may include a method by which the at least one node 20 transmits a message to the virtual node 10 depending on the type of event. For example, in the case of the informational message, the informational message is not an urgent message, and thus the at least one node 20 may transmit a related message to the virtual node 10 at a time according to a determined cycle. In the case of the state message indicating that a serious error occurred, it may be necessary to notify the virtual node 10 immediately upon occurrence of the error, and thus the at least one node 20 may transmit the message to the virtual node 10 immediately upon occurrence of the serious error.

In an embodiment, the virtual node 10 that receives information about an event may determine to rearrange pods within the at least one node 20. For example, when receiving an error message from the node A, the virtual node 10 may determine rearrange, in the node B, pods managed by the node A in consideration of a network connection state, a resource state, or the like.

FIG. 6 is a flowchart for explaining a method for registration to a virtual node according to an embodiment of the present disclosure.

For a brief description of the specification, descriptions of redundant content from FIG. 5 are omitted.

As described with reference to FIGS. 1 to 4, the virtual node 10 may include a virtual node client and a node manager. The at least one node 20 may include a node client.

In operation S610, the node client of the at least one node 20 may determine whether connection to the virtual node 10 is possible. The at least one node 20 may determine whether connection to the virtual node 10 is possible based on the obtained information of the virtual node 10.

In an embodiment, the at least one node 20 may obtain information about the virtual node 10 from an API server of a control plane. The information about the virtual node 10 may include, but is not limited to, information about a connection method to the virtual node, a connection address, or coverage of the virtual node. The API server may be an interface provided at a server side to allow a client to request a resource and may perform a function of monitoring elements present within a cluster and performing a task. The at least one node 20 may determine whether connection to the virtual node 10 is possible based on the obtained information. For example, the at least one node 20 may determine that connection to the virtual node 10 is not possible when a node is not provided within coverage of the virtual node 10.

In operation S620, the node client of the at least one node 20 may request registration to the node manager of the virtual node 10 by using universally unique identifier (UUID) information. The UUID information may refer to a standard protocol for ensuring the uniqueness of an identifier (ID) that may be issued by a separate system in a distributed environment. Each of the at least one node 20 may make a registration request to the virtual node 10 by using a unique UUID. The registration request of the at least one node 20 may include information about the unique UUID.

In an embodiment, when determining that connection to the virtual node 10 is possible in operation S610, the at least one node 20 may transmit the registration request to the node manager of the virtual node 10. A registration request message may include information about the at least one node 20. The information about the at least one node 20 may include, but is not limited to, information about a UUID of the at least one node 20, model information, available memory, information about a pod managed by the at least one node 20, and a registration history in the virtual node 10.

In operation S630, the node manager of the virtual node 10 may search for an object by using UUID information of the at least one node 20. The virtual node 10 may perform a search for the at least one node 20, based on information provided in the registration request message of the at least one node 20.

In an embodiment, the virtual node 10 may retrieve a registration history of the at least one node 20, based on the UUID information. When there is a registration history in the virtual node 10 in the at least one node 20, the virtual node 10 may obtain information about a purpose of use of the at least one node 20, resource information, or information about a pod managed by the at least one node 20.

The virtual node 10 may perform operation S640 when there is a registration history of the at least one node 20 and may perform operation S650 when there is no registration history.

In operation S640, the node manager of the virtual node 10 may determine whether to utilize the at least one node 20, based on the registration history and current resource state of the at least one node 20.

According to an embodiment, when the at least one node 20 has a registration history in the virtual node 10, the virtual node 10 may determine whether to utilize the at least one node 20, based on stored information about the at least one node 20. The information about the at least one node 20 may include, but is not limited to, information about a purpose of use of the at least one node 20, a past or present resource state, and a pod that is currently managed/previously managed at a time of transfer registration to the virtual node 10.

When the at least one node 20 has no registration history in the virtual node 10, the virtual node 10 may determine whether to utilize the at least one node 20, based on the current resource state of the at least one node 20.

In operation S650, the node manager of the virtual node 10 may generate, search for, and update an object for each UUID. The virtual node 10 may update information about the at least one node 20 when the at least one node 20 has a registration history in the virtual node 10 as a search result based on the UUID. The virtual node 10 may generate information about the at least one node 20 when the at least one node 20 has no registration history as a search result based on the UUID.

In an embodiment, the information about the at least one node 20 may include information about a current connection IP, an available resource and resource state, and information about a pod managed/to be managed by a node. For example, the node manager may generate or update an IP of a network proxy to which the at least one node 20 is connected. The node manager may classify available resources per node and generate or update information about the current resource state. As another example, in the case of a mobile node, available resources may be different for respective mobile models, and thus the node manager may classify available resources for the respective models and update and store or generate information about the resource state of the node in consideration of a pod currently managed by the mobile node.

The node manager may update information for managing pods distributed to the at least one node 20. Information for managing a pod may include, but is not limited to, information about the number of containers provided in the pod, a function of the pod, and arrangement of pods, or information about whether the pod is replicated, and a resource required by the pod. For example, the node manager may arrange a pod x and a pod y on a node A and a pod z on a node B, based on the information about the at least one node 20. The node manager may update information about an arrangement state of pods after the pods are arranged on nodes for each pod.

In operation S660, the node manager may distribute policies to the at least one node 20 that completes registration. The node manager may distribute, to each of the at least one node 20, a policy including information for managing a node or pods arranged on nodes.

In an embodiment, the policy may include information about a monitoring method for each node type or each pod type. For example, the information for managing a node or a pod may include information about a method of transmitting and receiving the corresponding information for each event, or a cycle for transmitting and receiving the corresponding information, when an event occurs in the node.

In detail, the event may include a log level. For example, the event may include an informational message (info) indicating state changes, a warning message (warn) indicating that there is no problem with the current execution itself but that an error may be caused in the future, a state message (error) indicating that a problem occurs during processing of a request, and a state message (fatal) indicating that a serious error occurs. Depending on the type of event, in the case of informational message, the informational message may not be an urgent message, and thus may be transmitted to the virtual node 10 according to a determined cycle. The message indicating that a serious error has occurred may need to be transmitted to the virtual node 10 immediately upon occurrence of the error.

In operation S670, the at least one node 20 may periodically provide information to the node manager. The at least one node 20 may transmit, to the node manager of the virtual node 10, information about an event or the at least one node 20 according to the policy received in operation S660.

In an embodiment, the virtual node 10 may identify the resource state or connection state to a network of the at least one node 20, based on the information about the at least one node 20, which may be obtained periodically. The virtual node 10 may determine whether to rearrange pods within the at least one node 20, based on the periodically received information. An operation related to rearrangement of pods is described with reference to FIG. 8.

FIG. 7 is a flowchart for explaining a distribution procedure of a pod according to an embodiment of the present disclosure.

Referring to Fig. 7, in operation S710, a control plane may distribute a plurality of pods to a virtual node. As shown in FIG. 1, the control plane may include, but is not limited to, an API server, a control manager, a cloud control manager, memory, and a scheduler.

In an embodiment, the scheduler of the control plane may distribute pods in consideration of a resource state of the virtual node. For example, the control plane may distribute the pods, based on the resource state of all of the at least one node 20 registered in the virtual node 10, rather than resource information for each of the at least one node 20 registered in the virtual node 10. That is, the scheduler may distribute the pods in consideration of available resources of the virtual node 10 or in consideration of resources of the virtual node 10, which may remain after the pods are distributed.

In an embodiment, when the scheduler of the control plane distributes a plurality of pods to the virtual node 10, the API server may update information about an arrangement state of the pods in the memory.

In operation S720, the node manager of the virtual node 10 may check the current resource state and pod distribution situation of the at least one node 20. The node manager may check the resource state and pod distribution situation by using a UUID of the registered at least one node 20.

In an embodiment, when performing the registration operation of the at least one node 20, the node manager may update or generate information about the current resource state, available resource, IP address of a connected network, and managed pod for each unique UUID of the at least one node 20. The node manager may check the resource state and current pod distribution situation of the at least one node 20, based on information about the at least one node 20, which may be updated or generated.

In operation S730, the node manager of the virtual node 10 may identify a first node for distributing pods. The node manager may identify the first node to which the pod is to be transmitted, based on the current resource state and pod distribution situation from among the at least one node 20.

In an embodiment, the virtual node 10 may identify the first node to which each of the plurality of pods received from the control plane is to be transmitted. The virtual node 10 may determine whether to distribute pods in consideration of a usage role, available memory, network connection state, and the like of the at least one node 20, based on the information about the at least one node 20, which is generated or updated.

In operation S740, the node manager of the virtual node 10 may distribute pods to the identified first node. The virtual node 10 may transmit the pod to the first node identified in operation S730.

In an embodiment, the virtual node 10 may distribute, to the at least one node 20, the plurality of pods received from the control plane in a distributed manner. The virtual node 10 may manage the pods, based on information or a policy for managing nodes and pods, transmitted in the registration operation of the at least one node 20.

In operation S750, the virtual node 10 may transmit, to the control plane, information about a pod distribution state. The virtual node client of the virtual node 10 may transmit information about the pod distribution state to the API server of the control plane when the plurality of pods are distributed to at least one node registered in the virtual node 10.

In an embodiment, the API server of the control plane may transmit the received information about the pod distribution state to the memory (or a distributed data storage (etcd)) and store the information. The information about the pod distribution state may include, but is not limited to, information about whether each of a plurality of pods is distributed, and information about an available resource after pod distribution.

In an embodiment, the control plane may determine whether to additionally transmit a pod to the virtual node 10, based on the received information about the pod distribution state. When rearranging pods in the at least one node 20, the virtual node 10 may transmit information about the pod distribution state to the control plane.

FIG. 8 is a diagram for explaining a rearrangement procedure of a pod according to an embodiment of the present disclosure.

Referring to Fig. 8, in operation S810, the node client of the at least one node 20 may periodically collect node resources. The at least one node 20 may monitor operations, based on the received pod and may obtain information about the node resources.

In an embodiment, available memory may vary depending on a node type of the at least one node 20. The at least one node 20 may periodically update information about a resource used in response to the operation based on the pod received from the virtual node 10, based on an available resource.

In an embodiment, the node resource may include, but may not be limited to, information about the amount of resources used when an operation is performed, a frequency of performing the operation, or an event that occurs when the operation is performed. The information about the event may include an informational message (info) such as a change in the state of a node, a warning message (warn) indicating that an error may occur in the future, a state message (error) indicating that an error occurs during performance of an operation, and a state message (fatal) indicating that a serious error occurs.

In an embodiment, the node client of the at least one node 20 may periodically obtain the node resource according to a determined cycle. The cycle for obtaining resources may be determined according to information for managing a node and a pod, which is received from the virtual node 10. For example, a node A, which receives a pod x related to driving of a high-priority application, may obtain information at short intervals, and a node B, which receives a pod y related to driving of a secondary application, may obtain information about the node resource at longer intervals than the node A.

In operation S820, the node client may determine a level of an event. The level may vary, depending on the event that occurs in operation S810.

For example, the informational message indicating a state change is not a critical event for an operation of a node, and therefore has a relatively low event level. In contrast, the message indicating that an error occurs or the message indicating that a serious error occurs may have a relatively high event level because an operation of a pod distributed to the corresponding node may not be performed.

In operation S830, the node client may transmit information to the node manager of the virtual node 10 according to a preconfigured policy. The node client may transmit, to the virtual node 10, information about an event that occurs in the at least one node 20 or about the node resource, based on information for managing a node and a pod.

In an embodiment, the node client may transmit information to the node manager immediately or periodically based on the event level determined in operation S820. For example, the informational message may be transmitted to the node manager at a preconfigured cycle depending on the event level. The message related to the error may be transmitted to the node manager subsequent to the corresponding message being obtained.

In operation S840, the node manager may update a state of the at least one node 20. The node manager may update information about the state of the at least one node 20, based on the information obtained in operation S830.

In an embodiment, the virtual node 10 may update the information about the changed state of the at least one node 20, based on information stored for the UUID of the at least one node 20. For example, when receiving information indicating that the available memory of the node A from among the at least one node 20 registered in the virtual node 10 is sufficient, the virtual node 10 may update the resource state for the node A. When receiving information indicating that a network connection state of the node B is unstable, the virtual node 10 may update information about the state of the node B.

In operation S850, the virtual node 10 may determine rearrangement of pods, based on the state of the at least one node 20. The virtual node 10 may determine whether to rearrange pods within the at least one node 20, based on the state information of the at least one node 20, updated in operation S840.

In an embodiment, the virtual node 10 may determine whether to rearrange pods, based on the resource state, network connection state, or battery state of the at least one node 20, or the like. For example, the virtual node 10 may determine to rearrange the pod y arranged on the node B when the network connection state of the node B is unstable. When the information indicating that the node A has sufficient resources is updated, the virtual node 10 may additionally distribute the pod y to the node A.

In operation S860, the virtual node 10 may perform rearrangement of pods. When performing the rearrangement of pods, the virtual node 10 may transmit information about the rearrangement of pods to the API server of the control plane. If the available memory of all of the at least one node 20 connected to the virtual node 10 changes as a rearrangement result of pods, the virtual node 10 may transmit information about the available memory to the API server.

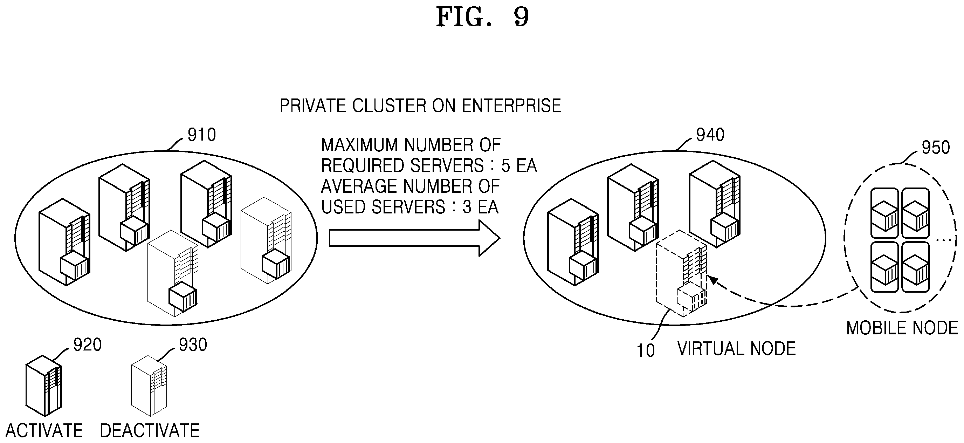

FIG. 9 is a diagram for explaining an example of a node management method through a virtual node according to an embodiment of the present disclosure.

Referring to FIG. 9, a resource may be used through the node management method by using a virtual node in, for example, a company or a factory. In the case of a company or a factory, a private data center (e.g., an on-premise data center) that may be owned and maintained in an own facility. For example, the company may process data as business information while ensuring high security through an on-premise system, but it takes a lot of time to establish the system, and thus it is necessary to plan resources in advance and process the data.

In the case of an existing method 910, the maximum number of servers required to process data within a private cluster is 5, but an average number of servers used is 3. When the system is established to include 5 servers to satisfy the maximum number of servers required, only 3 servers may be activated (920) on average and 2 servers may not be activated (930), which may result in a waste of resources.

Therefore, in the case of an embodiment of the present disclosure (940), the number of servers used on average (e.g., 3) may be maintained for stability of the system and fast processing of data, but a work processed by two servers may be replaced through a mobile node 950. In detail, information required for a work may be processed by the mobile node 950, and information may be processed or selected according to a high-importance event or a preconfigured cycle and transmitted to the virtual node 10.

In the case of the mobile node 950, connection to a network may be unstable depending on the mobility of a user, the amount of available resources may be low, and stable connection within a cluster may not be ensured due to a battery capacity issue, and as a result, an operation may be performed using the virtual node 10 according to an embodiment of the present disclosure. In the present disclosure, the mobile node 950 may refer to a node with a relatively low stability.

In an embodiment, the virtual node 10 may receive a registration request from the mobile node 950 and register the mobile node 950. The virtual node 10 may obtain and update the UUID, available memory, information about a pod, information about a registration history in the virtual node 10, and the like of the mobile node 950 through the registration procedure. The virtual node 10 may distribute and manage pods for performing an operation within a cluster, based on information about the mobile node 950. The virtual node 10 may periodically receive the information about the mobile node 950 and may determine whether to rearrange the pods, based on the received information.

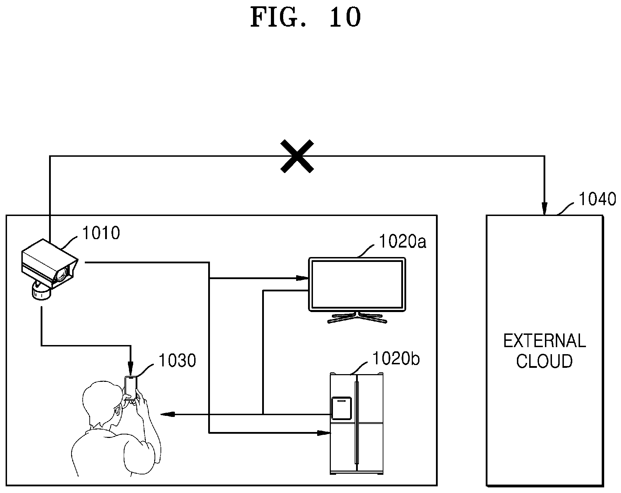

FIG. 10 is a diagram for explaining an example of a node management method through a virtual node according to an embodiment of the present disclosure.

Referring to FIG. 10, a method of processing data without exchanging information with an external cloud 1040 by using Internet of Things (IoT) home appliances 1020a and 1020b or a mobile node 1030 is illustrated.

As the use of a closed-circuit television (CCTV) 1010 in homes increases, a method of using a virtual node (not shown) according to an embodiment of the present disclosure may be proposed as a method of independently managing private data such as CCTV footage without transmitting the data to the external cloud 1040.

In the case of footage of the CCTV 1010, as filming may be conducted for 24 hours or a determined period of time, video data mat accumulate, and thus there is a problem in terms of a method of processing a large amount of data without using the external cloud 1040. In an example, data on images from the CCTV 1010 may be stored and the stored data may be transmitted to the mobile node 1030 by using the loT home appliances 1020a and 1020b, and thus the data may be processed by the corresponding mobile node 1030 during a time during which a user may not use the mobile node 1030. In the case of the mobile node 1030, the stability of the node may not be ensured due to mobility within the home or access to the outside, and accordingly, a virtual node (not shown) may be used.

For example, the virtual node may receive a registration request from the mobile node 1030 of the user and perform a registration operation. The mobile node 1030 registered in the virtual node may transmit information about a resource state of the mobile node to the virtual node at a determined cycle. When receiving information indicating that there are sufficient available resources from the mobile node 1030 of the user, the virtual node may transmit, to the mobile node 1030, image data stored in the loT home appliances 1020a and 1020b or the like. The mobile node 1030 may determine whether a special event occurs in the image data. The mobile node 1030 may transmit data obtained as a determination result to the virtual node, and the virtual node may transmit the obtained data to a server to perform processing on the data.

In a method of performing communication by the virtual node according to an embodiment of the present disclosure, a registration request may be received from at least one node from among a plurality of nodes. In the method of performing communication by the virtual node, at least one registration may be performed based on information related to at least one node. In the method of performing communication by the virtual node, a first node to which a pod is to be transmitted may be identified from among the at least one node and the pod may be transmitted to the first node, based on the information related to the at least one node. The pod may be received from the control plane that controls the plurality of nodes and the virtual node.

In the method of performing communication by the virtual node according to an embodiment of the present disclosure, a registration history of at least one node may be identified based on the information related to the at least one node. If there is a registration history of at least one node, whether to re-register the at least one node may be determined based on the information related to the at least one node and the registration history. The information related to the at least one node may be updated. If there is no registration history of at least one node, whether to register the at least one node may be determined based on the information related to the at least one node. The information related to the at least one node may be generated.

In the method of performing communication by the virtual node according to an embodiment of the present disclosure, information for managing at least one node may be transmitted to the at least one node. In the method, the information related to the at least one node may be received from the at least one node at a preconfigured cycle, based on the information for managing the at least one node.

In the method of performing communication by the virtual node according to an embodiment of the present disclosure, in case that an event occurs in at least one node, information related to the event may be received from the at least one node. In the method, a state of the at least one node may be updated based on the information related to the event, and whether to rearrange pods managed by the at least one node may be determined based on the state of the at least one node.

In the method of performing communication by the virtual node according to an embodiment of the present disclosure, a second node for rearranging pods managed by at least one node may be identified based on the state of the at least one node in case that rearrangement of the pods is determined based on the state of the at least one node. In the method, a pod may be transmitted to the second node.

In the method of performing communication by the virtual node according to an embodiment of the present disclosure, a cycle for receiving the information related to the event may be configured depending on a type of the event. In the method, the information related to the event may be received based on the configured cycle.

In the method of performing communication by the virtual node according to an embodiment of the present disclosure, a registration request may be transmitted based on a result of at least one node identifying whether connection to the virtual node is possible based on the information related to the virtual node.

In the method of performing communication by the virtual node according to an embodiment of the present disclosure, the information related to the at least one node may include at least one of a UUID of the at least one node, model information of the at least one node, available memory of the at least one node, pod information managed by the at least one node, or a registration history for the virtual node.

In the method of performing communication by the virtual node according to an embodiment of the present disclosure, information related to arrangement of pods may be transmitted to the control plane.

In the method of performing communication by the virtual node according to an embodiment of the present disclosure, the at least one node may mean a mobile node.

In the method of performing communication by the virtual node according to an embodiment of the present disclosure, the information related to the virtual node may be obtained from a control plane that controls a plurality of nodes including the node. In the method, a registration request including information related to the node may be transmitted to the virtual node, based on the information about the virtual node. In the method, at least one pod may be received from the virtual node, based on registration information generated in response to the registration request. The at least one pod may be received from the control plane.

In the method of performing communication by the virtual node according to an embodiment of the present disclosure, registration information may be obtained based on the information related to the node and the registration history when there is a registration history for a virtual node, based on the information related to the node. When there is no registration history for the virtual node, the registration information may be obtained based on the information related to the node.

In the method of performing communication by a node according to an embodiment of the present disclosure, information for managing the node may be received from the virtual node. In the method, the information about the node may be transmitted to the virtual node at a preconfigured cycle, based on the information for managing the node.

In the method of performing communication by the virtual node according to an embodiment of the present disclosure, when an event occurs, the information related to the event may be transmitted to the virtual node. In the method, information related to rearrangement of pods managed by a node may be received from the virtual node, based on the information related to the event.

In the method of performing communication by the virtual node according to an embodiment of the present disclosure, a registration request may be transmitted based on a result of identifying whether connection to a virtual node is possible based on information related to the virtual node.

A virtual node for performing communication according to an embodiment of the present disclosure may include a transceiver, memory storing one or more instructions, and at least one processor configured to execute the one or more instructions. The at least one processor may receive the registration request from at least one node of a plurality of nodes. The at least one processor may perform registration of the at least one node, based on information related to the at least one node. The at least one processor may identify a first node to which a pod is to be transmitted from among the at least one node and transmit the pod to the first node, based on the information related to the at least one node. The pod may be received from the control plane that controls the plurality of nodes and the virtual node.

A device-readable storage medium may be provided in the form of a non-transitory storage medium. As used herein, the term 'non-transitory storage medium may refere to a tangible device that does not contain signals (e.g. electromagnetic waves), and the term does not distinguish between cases in which data is stored semi-permanently or temporarily on a storage medium. For example, the 'non-transitory storage medium' may include a buffer in which data is temporarily stored.

According to an embodiment, methods according to various embodiments disclosed in the present disclosure, may be provided as included in a computer program product. The computer program product may be traded between sellers and buyers as commodities. The computer program product may be distributed in the form of a machine-readable storage medium (e.g., a compact disc read only memory (CD-ROM)), or may be distributed online (e.g., download or upload) via an application store or directly between two user devices (e.g., smartphones). In the case of online distribution, at least a portion of the computer program product (e.g., a downloadable application) may be temporarily stored or temporarily generated in a device-readable storage medium, such as memory of a server of a manufacturer, a server of an application store, or an intermediary server.

## Claims

1. A method of performing communication by a virtual node, the method comprising:
receiving a registration request from at least one node from among a plurality of nodes (S510);
performing registration of the at least one node, based on information related to the at least one node (S520);
identifying a first node to which a pod is to be transmitted from among the at least one node, based on the information related to the at least one node (S530); and
transmitting the pod to the first node (S540),
wherein the pod is received from a control plane configured to control the plurality of nodes and the virtual node.

2. The method of claim 1, wherein the performing of the registration of the at least one node comprises:
identifying a registration history of the at least one node, based on the information related to the at least one node;
in case that there is the registration history of the at least one node, based on the information related to the at least one node and the registration history, determining whether to re-register the at least one node and updating the information related to the at least one node; and
in case that there is no registration history of the at least one node, based on the information related to the at least one node, determining whether to register the at least one node and generating the information related to the at least one node.

3. The method of claim 1 or 2, further comprising:
transmitting, to the at least one node, information for managing the at least one node; and
receiving, from the at least one node, the information related to the at least one node at a configured cycle, based on the information for managing the at least one node.

4. The method of any one of claims 1 to 3, further comprising:
in case that an event occurs in the at least one node, receiving, from the at least one node, information related to the event;
based on the information related to the event, updating a state of the at least one node;
based on the state of the at least one node, determining whether to rearrange a pod managed by the at least one node;
in case that the pod is determined to be rearranged, based on the state of the at least one node, identifying a second node for rearranging the pod managed by the at least one node; and
transmitting the pod to the second node.

5. The method of any one of claims 1 to 4, wherein the receiving of the information related to the event comprises:
configuring a cycle for receiving the information related to the event according to a type of the event; and
based on the configured cycle, receiving the information related to the event.

6. The method of any one of claims 1 to 5, wherein the registration request is transmitted based on a result of identifying whether the at least one node is capable of being connected to the virtual node, based on information related to the virtual node.

7. The method of any one of claims 1 to 6, wherein the information related to the at least one node comprises at least one of a universally unique identifier (UUID) of the at least one node, model information of the at least one node, available memory of the at least one node, information related to the pod managed by the at least one node, or a registration history for the virtual node.

8. The method of any one of claims 1 to 7, further comprising transmitting, to the control plane, information related to an arrangement of the pod.

9. A method of performing communication by a node, the method comprising:
obtaining information related to a virtual node from a control plane configured to control a plurality of nodes comprising the node;
transmitting, to the virtual node, a registration request comprising information related to the node, based on the information related to the virtual node; and
receiving, from the virtual node, at least one pod, based on registration information generated in response to the registration request, wherein the at least one pod is received from the control plane.

10. The method of claim 9, wherein, based on the information related to the node,
in case that there is a registration history for the virtual node, the registration information is obtained based on the information about the node and the registration history, and
in case that there is no registration history for the virtual node, the registration information is obtained based on the information related to the node.

11. The method of claim 9 or 10, further comprising:
receiving, from the virtual node, information for managing the node; and
transmitting, to the virtual node, the information related to the node at a configured cycle, based on the information for managing the node.

12. The method of any one of claims 9 to 11, further comprising:
in case that an event occurs, transmitting, to the virtual node, information related to the event; and
based on the information related to the event, receiving, from the virtual node, information related to rearrangement of the pod managed by the node.

13. The method of any one of claims 9 to 12, wherein the transmitting of the registration request comprises transmitting the registration request, based on a result of identifying whether connection to the virtual node is possible based on the information related to the node.

14. The method of any one of claims 9 to 13, wherein the information related to the node comprises at least one of a universally unique identifier (UUID) of the node, model information of the node, available memory of the node, information of the pod managed by the node, or a registration history for the virtual node.

15. A virtual node for performing communication, the virtual node comprising:
a transceiver (410);
memory (430) storing one or more instructions; and
at least one processor (420) configured to execute the one or more instructions,
wherein the at least one processor (420) is configured to execute the one or more instructions to
receive a registration request from at least one node from among a plurality of nodes,
perform registration of the at least one node, based on information related to the at least one node,
identify a first node to which a pod is to be transmitted from among the at least one node, based on the information related to the at least one node, and
transmit the pod to the first node,
wherein the pod is received from a control plane configured to control the plurality of nodes and the virtual node.
